**Europäisches Patentamt**

**European Patent Office**

**Office européen des brevets**

(19)

(11) Veröffentlichungsnummer: **0 045 851**
**B1**

(12) # EUROPÄISCHE PATENTSCHRIFT

(45) Veröffentlichungstag der Patentschrift:
**06.07.83**

(51) Int. Cl.³: **C 09 C 1/00**

(21) Anmeldenummer: **81105332.1**

(22) Anmeldetag: **09.07.81**

(54) Verfahren zur Herstellung von mit Metalloxiden beschichteten schuppenförmigen Glimmerpigmenten und deren Verwendung.

(30) Priorität: **08.08.80 DE 3030056**

(43) Veröffentlichungstag der Anmeldung:.
**17.02.82 Patentblatt 82/7**

(45) Bekanntmachung des Hinweises auf die Patenterteilung:
**06.07.83 Patentblatt 83/27**

(84) Benannte Vertragsstaaten:
**CH DE FR GB IT LI**

(56) Entgegenhaltungen:
**US-A-3 087 829**
**US-A-3 536 520**

(73) Patentinhaber: **BASF Aktiengesellschaft,**
**Carl-Bosch-Strasse 38, D-6700 Ludwigshafen (DE)**

(72) Erfinder: **Ostertag, Werner, Dr., Oberer-Bergel-Weg 2,**
**D-6718 Gruenstadt (DE)**
Erfinder: **Bittler, Knut, Dr., Kardinal-Wendel-Strasse 54,**
**D-6720 Speyer (DE)**
Erfinder: **Bock, Gustav, Dr., Waldstrasse 16,**
**D-6730 Neustadt (DE)**

## Verfahren zur Herstellung von mit Metalloxiden beschichteten schuppenförmigen Glimmerpigmenten und deren Verwendung

Beschichtete Glimmerpigmente können in Lack- und Kunststoff-Filmen sowie in Glas interessante optische Effekte aufweisen, die auf der Transmission und Reflexion des Lichtes an dem blattwerkartig orientierten Glimmerschuppenpigment beruhen.

Man spricht von Perlglanzpigmenten, wenn die Beschichtungen ein irisierendes, perlmuttartiges Aussehen aufweisen. Dieses auf Interferenzphänomene sich gründende Aussehen der Beschichtungen rührt daher, daß die Glimmersubstrate mit Material belegt sind, dessen Brechzahl sich stark von der des Glimmers und des Bindemittels unterscheidet. Nicht beschichtetes Glimmerpigment zeigt Perlglanz-Effekte nicht, da Glimmer eine sehr ähnliche Brechzahl wie die als Bindemittel verwendeten Lacke und Kunststoffe aufweist (ca. 1,5) und sich somit optisch von denselben nicht abhebt. Erst durch Aufbringen von Überzügen mit einer anderen, i. a. höheren Brechzahl gelingt es, das Glimmerpigment optisch in Erscheinung treten zu lassen. Besonders bekannt geworden sind in der Vergangenheit Überzüge aus $TiO_2$, $ZrO_2$, $Fe_2O_3$ und ihre Hydroxide sowie Kombinationen derselben. So weisen beispielsweise die in DE-C-1 467 468, US-A-4 146 403 und DE-A-2 313 331 beschriebenen Perlglanzpigmente eine aus zwei Komponenten bestehende transparente Beschichtung auf, nämlich zunächst eine erste aus $TiO_2$ oder $ZrO_2$ bestehende farblose Schicht und darüber eine aus FeOOH, $Fe_2O_3$, $Cr_2O_3$ oder $V_2O_5$ bestehende farbige Schicht.

Sämtliche bisher bekannten Perlglanz- oder Schuppenpigmente werden in wäßrigem Medium hergestellt, und zwar dergestalt, daß gemahlenes Glimmerpigment in ein metallsalzhaltiges Beschichtungsbad eingetragen wird, in dem dann durch vorsichtige Hydrolyse die Metallverbindungen zersetzt und die entsprechenden Hydroxide aus- und auf das Glimmerpigment aufgefällt werden. Der Auffäll-Vorgang kann wiederholt durchgeführt werden. Nach der Beschichtung wird das überzogene Pigment filtriert, gewaschen und getrocknet und meist auch calciniert.

Solche Verfahren zur Herstellung von beschichteten Glimmerschuppenpigmenten sind ihrer Natur nach sehr aufwendig und teuer. Sie umfassen diverse, z. T. sehr langwierige Stufen und müssen besonders während der Beschichtungsphase sehr genau kontrolliert werden. Ein weiterer Nachteil dieser Verfahren liegt darin, daß es bisher nicht gelungen ist, farbintensive Schuppenpigmente herzustellen, was wohl daran liegt, daß eine Farbintensivierung über die Erhöhung der Schichtendicke nur sehr begrenzt möglich ist. Wie oben erwähnt, werden aus dem Beschichtungsbad zunächst stets voluminöse Hydroxide abgeschieden, die erst bei einer späteren Trocknungs- und Calcinierungsstufe in Oxide umgewandelt werden. Der mit der Wasserabgabe verbundene Volumenverlust führt dazu, daß dickere Überzüge leicht ihre Gleichförmigkeit und die Pigmente damit ihren Glanz verlieren. Nicht selten kommt es sogar vor, daß sich die Beschichtung vom Glimmersubstrat ablöst.

Dies tritt besonders dann auf, wenn die Pigmente mit Bindemitteln zu Lacken verarbeitet werden, wobei durch die hier auftretenden Scherkräfte die aufgebrachten Oxidschichten abplatzen. Um diesen Nachteil zu verringern, können die beschichteten Pigmente calciniert werden und in der US-A-4 146 403 wird zu dem gleichen Zweck ein Verfahren beschrieben, bei dem das Glimmerpigment zunächst mit einer farblosen Zwischenschicht bzw. Haftschicht aus Titandioxid oder Aluminiumoxid versehen wird bevor man eine färbende Endschicht aus Eisenoxiden aufbringt.

Der vorliegenden Erfindung lag die Aufgabe zugrunde, ein Verfahren zur Herstellung von mit Metalloxiden beschichteten Glimmerschuppen-Pigmenten bereitzustellen, das die oben aufgezeigten Nachteile der bekannten Verfahren nicht aufweist und bei dem man in einem Arbeitsgang in einfach zu reproduzierender Weise haftfeste farbige Oxidschichten erzeugen kann.

Es wurde nun gefunden, daß diese Aufgabe dadurch gelöst werden kann, daß man dampfförmige Metallcarbonyle mit Sauerstoff bei erhöhten Temperaturen in Gegenwart von in Bewegung gehaltenen Glimmerschuppen oxidiert mit der Maßgabe, daß die Menge der in die Reaktionszone eingeführten Carbonyle, bezogen auf die Menge der übrigen eingeführten Gase 5 Vol.-% (gerechnet bei 20°C und 1,013 bar) nicht überschreitet.

Zur Durchführung des erfindungsgemäßen Verfahrens werden die schuppenförmigen Pigmente in einer hierfür geeigneten Vorrichtung in Bewegung gehalten, z. B. in einem Drehrohr oder vorzugsweise in einem Wirbelreaktor. Nachdem die Pigmente auf die Reaktionstemperatur von 150 bis 450°C, vorzugsweise von 180 bis 250°C erwärmt worden sind, werden in den Reaktionsraum die metallcarbonylhaltigen Gase und der für die Verbrennung erforderliche Sauerstoff eingeführt. Die Menge des dampfförmigen Metallcarbonyls wird so bemessen, daß dessen Konzentration, bezogen auf die Menge der übrigen in den Reaktionsraum eingeleiteten Gase 5 Vol.-%, vorzugsweise 1 Vol.-% nicht übersteigt (bezogen auf Normalbedingungen, d. h. 20°C und 1,013 bar).

Die Metallcarbonyle werden zweckmäßig mittels eines Trägergases, das gegenüber den Carbonylen inert ist, z. B. Stickstoff oder Argon, in den Reaktionsraum eingebracht. Dort reagieren sie mit dem ebenfalls in den Reaktionsraum eingebrachten Sauerstoff, der bei der Durchführung der Reaktion in einem Wirbelreaktor zweckmäßig, z. B. in Form von Luft mit dem Wirbelgas eingeführt wird, zu Metalloxid und flüchtigem Kohlenoxid, wobei sich bei den genannten Reaktionsbedingungen das Metalloxid auf den schuppenförmigen Pigmenten abscheidet und diese überzieht. Besonders gleichmäßige Überzüge werden erhalten, wenn man in dem bevorzugten Temperaturbereich von 180 bis 250°C arbeitet. Für eine weitgehende Abscheidung des gebildeten Metalloxides auf den Glimmerschuppen ist die hohe Verdünnung des Carbonyls im Gasraum maßgeblich. Bei 5 Vol.-% übersteigenden Konzentrationen an Metallcarbonyl, ist eine weitgehende Abscheidung auf den Glimmerschuppen nicht mehr gewährleistet, vielmehr fällt dann vorwiegend staubförmiges Metalloxid neben unbeschichteten Glimmerschuppen an.

Als Metallcarbonyle kommen grundsätzlich alle Carbonyle in Betracht, die einen merklichen Dampfdruck besitzen und deren entsprechenden Metalloxide farbig sind. Neben z. B. Chromhexacarbonyl kommen vor allem Eisenpentacarbonyl und Nickeltetracarbonyl in Frage.

Sofern bei der Reaktion ein Metalloxid gebildet werden soll, bei dem das Metall die höchste Oxidationsstufe aufweist, z. B. im Falle des Eisenpentacarbonyls Eisen(III)-oxid, muß in den Reaktionsraum zumindest so viel Sauerstoff eingeführt werden, als stöchiometrisch zur Bildung von $Fe_2O_3$ sowie flüchtigem Kohlendioxid erforderlich ist. Ein Überschuß an Sauerstoff ist in diesem Fall nicht schädlich, wenn man auch einen Überschuß von 10% im allgemeinen nicht überschreiten wird. Anders liegt der Fall, wenn die zu bildende Oxidschicht nicht die höchste Oxidationsstufe des Metalles besitzt. Bei der Abscheidung von z. B. aus Magnetit ($Fe_3O_4$) bestehenden Oxidschichten müssen Carbonyl und Sauerstoff möglichst genau im stöchiometrischen Verhältnis in den Reaktionsraum eingeführt werden.

Die schuppenförmigen Silikat- und Metalloxid-Pigmente weisen im allgemeinen mittlere Teilchengrößen in der Hauptdimension von 5 bis 400 $\mu$, vorzugsweise von 30 bis 100 $\mu$, insbesondere unter 70 $\mu$ auf, während ihre mittlere Dicke von 0,03 bis 30 $\mu$, vorzugsweise von 0,2 bis 5 $\mu$ variieren kann. Aus Gründen der mechanischen Stabilität der Schuppen sollte die genannte Minimaldicke nicht unterschritten werden.

Als zu belegendes Glimmerschuppen-Material kommen insbesondere helle bzw. weiße Glimmer in Betracht. Besonders bevorzugt sind Schuppen aus Muskovit, der vorzugsweise naß vermahlen zum Einsatz kommt. Selbstverständlich sind auch andere blättchenförmige Silikatschuppen geeignet, wie künstliche Glimmer oder Glasschuppen.

Das z. B. mit Eisenoxid belegte Glimmerpigment zeigt je nach Dauer der Beschichtung verschiedene Farbtöne. Die zunächst gelbliche Färbung geht über in gelbbraun, rot und schließlich in braun-violett. Selbstverständlich hängt die Menge des die Glimmerschuppen überziehenden Eisenoxids, die zur Erzielung eines bestimmten Farbtons notwendig ist, von der Korngröße des eingesetzten Glimmerpulvers ab. Bei Verwendung von Glimmer mit einer Korngröße von 70 bis 90 $\mu$ sind Pigmente mit 2 Gew.-% $Fe_2O_3$ gelb, mit 7 Gew.-% rot und mit 12 Gew.-% violett. Je nach Wunsch kann die Beschichtung bei einem beliebigen Farbton abgebrochen werden. Das Produkt, das dann keiner weiteren Nachbehandlung mehr bedarf, läßt sich nach Abkühlung dem Reaktor entnehmen.

Bei der Zersetzung von Nickeltetracarbonyl erhält man demgegenüber Pigmente mit graugrüner Farbe, während für den Fall, daß die Zersetzung des Eisenpentacarbonyls nur bis zur Magnetitstufe getrieben wird, schwarze Pigmente erhalten werden.

Mit den nach dem erfindungsgemäßen Verfahren erhältlichen Pigmenten lassen sich in Lackierungen, Beschichtungen und Kunststoffüberzügen Metallic-Effekte erzielen. Im Gegensatz zu den Pigmenten, bei denen schuppenförmige Glimmerteilchen auf nassem Weg mit farbigen Oxiden belegt worden sind, weisen sie überraschenderweise ein vorwiegend von Reflexion geprägtes Aussehen auf.

### Beispiel 1

In einem Wirbelreaktor aus Glas mit einem Innendurchmesser von 60 mm, der mit einem Frittenboden aus Quarz ausgestattet ist, werden 200 g gemahlener Muskovit-Glimmer mit einer durchschnittlichen Korngröße in der Hauptdimension von 100 $\mu$ und einer mittleren Dicke von 9 $\mu$ (BET-Oberfläche 1,5 m$^2$/g) gegeben und mit 300 l Luft/h verwirbelt. Die Temperatur des Wirbelbetts wird mit Hilfe einer Infrarotheizung auf 250°C angehoben. Anschließend werden Eisenpentacarbonyldampf und Stickstoff (Trägergas) über eine Düse, die sich unmittelbar über der Fritte des Wirbelbettes befindet, eingeführt. Die Menge des pro Stunde in das Wirbelbett eingetragenen Eisencarbonyls beträgt 17 g, die des Trägergases Stickstoff 100 l. Dementsprechend beträgt der Carbonylanteil, bezogen auf die übrigen in das Wirbelbett eingeführten Gase 0,5 Vol.-% (bezogen auf 20°C und 1,013 bar).

Nach 45 min ist die Farbe des Glimmerschuppenpigments gelbbraun, nach 120 min rotbraun. Nach Abstellen der Carbonylzufuhr wird das beschichtete Pigment abgekühlt und kann dem Reaktor entnommen werden.

Das rotbraun glänzende Pigment wird mit einem Alkyd/Melaminharzlack (DIN-Entwurf 53 238) angerieben und die Dispersion auf einer Unterlage abgerakelt. Der dabei erzeugte rotbraun pigmentierte Lackfilm weist Metallic-Effekt auf.

## Beispiel 2

200 g naßgemahlener gesiebter Muskovit, der eine durchschnittliche Korngröße in der Hauptdimension von 50 μ und eine mittlere Dicke von 4 μ aufweist, wird in der in Beispiel 1 beschriebenen Apparatur mit 300 l/h Luft und zusätzlich 300 l/h Stickstoff verwirbelt. Die Temperatur des Wirbelbettes wird mit Hilfe von IR-Strahlen, die um den Reaktor angeordnet sind, auf 220°C angehoben. Dann werden 145 g/h Eisencarbonyldampf und 100 l/h Stickstoff-Trägergas in das Wirbelbett eingetragen. Der Anteil an Carbonyl beträgt, bezogen auf die übrigen in das Wirbelbett eingeführten Gase, 0,25 Vol.-% (bezogen auf 20°C und 1,013 bar). Nach einer Beschichtungsdauer von 10 min ist der Glimmer gelb, nach weiteren 40 min gelbbraun und nach weiteren 70 min braunrot gefärbt.

Abgekühltes, dem Reaktor entnommenes Produkt zeigt bei der rasterelektronenmikroskopischen Untersuchung deutlich, daß die Glimmerplättchen mit $Fe_2O_3$ belegt sind. Röntgenographisch läßt sich das Eisenoxid als $\alpha$-$Fe_2O_3$ identifizieren. Mit Alkyd/Melaminharzlack angerieben, können mit dem Pigment hochglänzende Filme erzeugt und hergestellt werden, bei dem der Metall-Effekt insbesondere über dunklem Untergrund zur Geltung kommt.

## Beispiel 3

180 g gemahlener Muskovit der durchschnittlichen Teilchengröße in der Hauptdimension von 90 μ und einer mittleren Dicke von 5 μ (BET-Oberfläche 1,7 m²/g) werden in der in Beispiel 1 beschriebenen Apparatur mit 250 l/h Stickstoff und 50 l/h Luft verwirbelt und mit einer Infrarotheizung auf 250°C gebracht. Anschließend werden 10 g Nickeltetracarbonyl und 200 l/h Stickstoff in das Wirbelbett eingedüst. Nach zwei Stunden wird ein grauschwarzes, glänzendes Pigment erhalten. Der Carbonylanteil beträgt, bezogen auf die übrigen in das Wirbelbett eingeführten Gase, 0,26 Vol.-%, bezogen auf 20°C und 1,013 bar.

## Beispiel 4

In der unter Beispiel 1 beschriebenen Apparatur werden 210 g gemahlener Muskovit-Glimmer mit einer durchschnittlichen Teilchengröße von 90 μ in der Hauptdimension und einer mittleren Dicke von 7 μ (BET-Oberfläche 1,0 m²/g) mit 300 l/h Stickstoff und 20 l/h Luft gewirbelt. Anschließend wird in das auf 300°C aufgeheizte Wirbelbett 11,3 g/h Eisenpentacarbonyldampf und 100 l/h Stickstoff eingetragen. Nach 2,5 h hat das Pigment eine tiefschwarz glänzende Farbe. In Kunststoff eindispergiert zeigt das Pigment Metall-Effekt. Die Menge Eisenpentacarbonyl beträgt, bezogen auf die übrigen in das Wirbelbett eingeführten Gase, 0,3 Vol.-%,

gerechnet bei 20°C und 1,013 bar.

## Beispiel 5

In einen Wirbelreaktor mit dem Innendurchmesser 300 mm, der mit einem Frittenboden und einer elektrischen Heizung ausgerüstet ist, werden 15 kg naß gemahlener Muskovit mit einer durchschnittlichen Teilchengröße von 80 μ in der Hauptdimension und einer mittleren Dicke von 3 μ eingefüllt und mit 5000 l/h Stickstoff und 550 l/h Luft verwirbelt. Dann wird das Wirbelgut mit der elektrischen Heizung auf 230°C erhitzt. Durch eine im Frittenboden befindliche Düse werden anschließend 330 g/h Eisenpentacarbonyldampf zusammen mit 2400 l/h Stickstoff ins Wirbelbett eingetragen. (Menge Eisencarbonyl = 0,5 Vol.-%, bezogen auf die übrigen, in die Wirbelschicht eingeführten Gase, gerechnet bei 20°C und 1,013 bar.) Nach einer Dauer von 10 h ist das Glimmerpigment gelbrot gefärbt.

Wird das gelbrote Pigment mit Alkyd/Melaminharzlack (DIN-Entwurf 53 238) angerieben und auf eine Unterlage abgerakelt, so zeigt die Beschichtung besonders bei dunklem Untergrund einen deutlichen Metall-Effekt.

Die eisenoxidbeschichteten Glimmerplättchen zeichnen sich durch außerordentlich gute Licht- und Temperaturbeständigkeit (bis über 500°C) aus.

## Patentansprüche

1. Verfahren zur Herstellung von mit Metalloxiden beschichteten schuppenförmigen Glimmer-Pigmenten, dadurch gekennzeichnet, daß man dampfförmige Metallcarbonyle mit Sauerstoff bei erhöhten Temperaturen in Gegenwart von in Bewegung gehaltene Glimmerschuppen zu Metalloxiden oxidiert mit der Maßgabe, daß die Menge der in die Reaktionszone eingeführten Carbonyle, bezogen auf die Menge der übrigen eingeführten Gase 5 Vol.-% (gerechnet bei 20°C und 1,013 bar) nicht überschreitet.

2. Verfahren nach Anspruch 1, dadurch gekennzeichnet, daß man die Oxidation der Metallcarbonyle in einer Wirbelschicht der Glimmerschuppen durchführt.

3. Verfahren nach Ansprüchen 1 bis 2, dadurch gekennzeichnet, daß man als Metallcarbonyle Eisenpentacarbonyl oder Nickeltetracarbonyl einsetzt.

4. Verfahren nach Ansprüchen 1 bis 3, dadurch gekennzeichnet, daß die Glimmerschuppen eine mittlere Teilchengröße in der Hauptdimension von 5 bis 400 μ bei einer Dicke von 0,03 bis 30 μ haben.

5. Verfahren nach Ansprüchen 1 bis 4, dadurch gekennzeichnet, daß man als Glimmerschuppen weiße, naß gemahlene Glimmer einsetzt.

6. Verfahren nach Ansprüchen 1 bis 5, dadurch gekennzeichnet, daß man die Oxidation bei Temperaturen von 150 bis 450°C durchführt.

7. Verfahren nach Ansprüchen 1 bis 6, dadurch gekennzeichnet, daß man die Oxidation bei Temperaturen von 180 bis 250° C durchführt.

8. Verwendung der gemäß Ansprüchen 1 bis 7 hergestellten mit Metalloxiden beschichteten schuppenförmigen Glimmerpigmente als Pigmente in Lacken, Kunststoffen oder Gläsern.

## Claims

1. A process for the preparation of a flaky mica pigment coated with metal oxide, wherein a vaporous metal carbonyl is oxidized to metal oxide with oxygen at an elevated temperature in the presence of mica flakes which are kept in motion, with the proviso that the amount of carbonyl introduced into the reaction zone, based on the amount of the other gases introduced, does not exceed 5% by volume (calculated at 20° C and 1.013 bar).

2. A process as claimed in claim 1, wherein the oxidation of the metal carbonyl is carried out in a fluidized bed of the mica flakes.

3. A process as claimed in claim 1 or 2, wherein the metal carbonyl employed is iron pentacarbonyl or nickel tetracarbonyl.

4. A process as claimed in claims 1 to 3, wherein the mica flakes have a mean size in the largest dimension of from 5 to 400 μm and a thickness of from 0.03 to 30 μm.

5. A process as claimed in claims 1 to 4, wherein the mica flakes are white wet-milled mica.

6. A process as claimed in claims 1 to 5, wherein the oxidation is carried out at from 150 to 450° C.

7. A process as claimed in claims 1 to 6, wherein the oxidation is carried out at from 180 bis 250° C.

8. The use of flaky mica pigments coated with metal oxide, prepared according to claims 1 to 7, as pigments in surface coatings, plastics and glasses.

## Revendications

1. Procédé pour la préparation de pigments micacés en paillettes enduits d'oxydes métalliques, caractérisé en ce qu'on oxyde des métaux-carbonyles à l'état de vapeur avec de l'oxygène à température élevée, en présence de paillettes de mica maintenues en mouvement pour former des oxydes métalliques, avec cette condition que la quantité des carbonyles introduits dans la zone de réaction, calculée à 20° C et sous 1,013 bars et rapportée à la quantité des autres gaz introduits, ne dépasse pas 5% en volume.

2. Procédé selon la revendication 1, caractérisé en ce qu'on effectue l'oxydation des métaux-carbonyles dans un lit fluidisé des paillettes de mica.

3. Procédé selon la revendication 1 ou 2, caractérisé en ce qu'on utilise, en tant que métal-carbonyle, du fer-pentacarbonyle ou du nickel-tétracarbonyle.

4. Procédé selon l'une quelconque des revendications 1 à 3, caractérisé en ce que les paillettes de mica ont une grosseur moyenne de particules dans la dimension principale de 5 à 400 microns, pour une épaisseur de 0,03 à 30 microns.

5. Procédé selon l'une quelconque des revendications 1 à 4, caractérisé en ce qu'on utilise, en tant que paillettes de mica, du mica blanc, broyé à l'état humide.

6. Procédé selon l'une quelconque des revendications 1 à 5, caractérisé en ce qu'on effectue l'oxydation à une température de 150 à 450° C.

7. Procédé selon l'une quelconque des revendications 1 à 6, caractérisé en ce qu'on effectue l'oxydation à une température de 180 à 250° C.

8. Utilisation de pigments micacés en paillettes enduits d'oxydes métalliques, préparés suivant l'une quelconque des revendications 1 à 7, comme pigments dans des vernis, des matières synthétiques ou des verres.